(19) Europäisches Patentamt
European Patent Office
Office européen des brevets

(11) **EP 3 845 346 A1**

(12) **EUROPEAN PATENT APPLICATION**

(43) Date of publication:
**07.07.2021 Bulletin 2021/27**

(51) Int Cl.:
***B25J 9/16*** *(2006.01)*

(21) Application number: **19383218.5**

(22) Date of filing: **31.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Fundación Tecnalia Research & Innovation**
**20009 San Sebastián, Guipúzcoa (ES)**

(72) Inventors:
- **Prada Sarasola, Miguel**
 **20009 Donostia - Guipúzcoa (ES)**
- **McIntyre, Joseph**
 **20009 Donostia - Guipúzcoa (ES)**

(74) Representative: **Balder IP Law, S.L.**
**Paseo de la Castellana 93**
**5ª planta**
**28046 Madrid (ES)**

(54) **METHOD, SYSTEM AND COMPUTER PROGRAM PRODUCT FOR CONTROLLING THE TELEOPERATION OF A ROBOTIC ARM**

(57)     A computer-implemented method for controlling teleoperation of a robotic arm, comprising: providing a robotic arm (20) including a base, a movable distal end effector (21) and a plurality of joints between the base and the movable distal end effector (21); at a computerized system interface (30), receiving a manipulation command from a haptic device (12) disposed in a control console (10) remotely located from the robotic arm (20), to move the end effector (21) with a desired end effector movement; from the manipulation command, calculating an end effector (21) displacement movement of the plurality of joints to execute the desired end effector movement, wherein calculating the end effector (21) displacement movement of the plurality of joints comprises defining a Jacobian matrix for the joints and calculating joint velocities using said Jacobian matrix; and executing the desired end effector movement. A homogeneous damped pseudo-inverse is applied to the Jacobian matrix for the joints, in such a way that all the possible directions of motion are damped by a same factor.

**FIG. 1**

EP 3 845 346 A1

## Description

## TECHNICAL FIELD

The present invention relates to the field of teleoperated control of robotic arms using haptic devices. In particular, it relates to such control when the robotic arm is placed in a configuration that is at or near a kinematic singularity.

## STATE OF THE ART

With the advent of modern robots, efficient algorithms for solving inverse kinematics and effective 3D and 6D haptic feedback devices, the teleoperated control of the endpoint of a robot arm to follow the 3D (position) or 6D (position plus orientation) movements of the hand of a human operator is conceptually straightforward. One needs simply measure the displacement of the hand and send a command to the robot arm to execute the same displacement. Aside from constraints when one reaches the limits of motion of the robot arm, there is a direct mapping from the motion of the hand to the desired endpoint motion of the robot.

In the context of robotics, the joint and Cartesian velocity spaces are related by the Jacobian matrix with

$$\vec{v} = J\vec{q},$$ where $\vec{v}$ represents the velocity of the end effector in Cartesian coordinate, $\vec{q}$ and $\dot{\vec{q}}$ represent the rotational position and velocity of each of the robot's joints, respectively, and $J$ represents the Jacobian matrix of the forward kinematic transformation that maps joint angular velocities to the velocity of the robot's end point in Cartesian coordinates. Therefore, when the Jacobian is square and full-rank, joint velocities that produce the desired Cartesian velocity can be computed with

$$\vec{q} = J^{-1}\vec{v}.$$ Obtaining this joint velocity $\dot{\vec{q}}$ from the desired Cartesian velocity $\vec{v}$ is known as the differential inverse kinematics problem.

However, there are situations where the Jacobian can be non-square or loses rank. One possible case is for a redundant manipulator, where the robot has more degrees of freedom than dimensions in Cartesian velocity space (i.e. 6). The other possible case is when the Jacobian matrix becomes singular (loses rank) and cannot be inverted. Configurations of the robot joints $\vec{q}$ for which the Jacobian matrix is singular are known as "singular configurations".

The pseudo-inverse $J^+$ is a generalization of the matrix inverse that can be applied to non-square or non-full-rank matrices. When applied to a square full-rank matrix, it is equivalent to the matrix inverse. But when applied to a non-square or non-full-rank matrix it gives an approximate solution which, in the case of singular configurations (that is to say, configurations in which the matrix is singular), minimizes the velocity tracking error

$$\left\| \vec{v} - J^+\vec{q} \right\|.$$ The pseudo-inverse has the benefit of providing a solution to the differential inverse kinematics problem for singular configurations.

Difficulties arise, however, when the robot is placed in a configuration that is near a kinematic singularity, even when the pseudo inverse is employed. As the robot approaches the singular configuration, motion required at the rotary joints can increase without bound for certain directions of motion expressed in end-effector space. When close to a singular configuration, both the Jacobian inverse and the pseudo-inverse (which are the same, since matrix is still full-rank) nevertheless provoke arbitrarily high joint space velocities even for arbitrarily low Cartesian space velocities. More precisely, the Jacobian that maps joint displacements to Cartesian displacements becomes "ill conditioned", such that the eigenvalues of the inverse (i.e. the "inverse Jacobian" that maps desired end-effector displacement to joint displacement) approach infinity. As a consequence, if the operator attempts to move the end-effector of the robot to a position and orientation that requires a joint configuration near a singularity, small displacements of the endpoint may result in near-infinite requested velocities at one or more of the joints and any control algorithms that depend on feedback of the end effector's 6D position and orientation to drive the joints (e.g. a PID controller in hand space) will become unstable.

A useful way to conceptualize the mapping that the Jacobian matrix represents is to use the Singular Value Decomposition. This transformation, when applied to a linear transformation between two spaces (here the joint and Cartesian velocity spaces), decomposes in into three matrices as: $J = U\Sigma V^*$, where U is a base for the output space of the transformation (the Cartesian velocity space in this case), V is a base for the input space of the transformation (the joint velocity space) and $\Sigma$ is a (possibly non-square) matrix with the singular values in its diagonal (i.e. $\Sigma = \text{diag}(\sigma_1 ... \sigma_m)$). Here, V* represents the conjugate transpose of V, which generalizes to complex matrices. In the context of the differential inverse kinematics problem the matrices will always contain real values, and therefore $V^* = V^T$.

The transformation of a given vector in joint velocity space to its corresponding Cartesian velocity space can be viewed as three separate steps: (1) The joint space velocity vector is projected onto the base defined by V. (2) Each resulted component of the vector in this new base is scaled by its corresponding singular value. (3) Each component is then mapped to the base defined by U. The matrix inverse can be expressed in SVD terms as $J^{-1} = V\Sigma^{-1}U^T$. For non-square or non-full-rank matrices, this cannot be computed because $\Sigma$ is equally non-square or non-full-rank (i.e. $\exists i, \sigma_i = 0$). Using the SVD decomposition, the matrix pseudo-inverse can be expressed as $J^+ = V\Sigma^+U^T$, where $\Sigma^+$ is computed by replacing each non zero element by its inverse (i.e. $\sigma_i \rightarrow 1/\sigma_i$)

and transposing the resulting matrix. As previously discussed, this is well-defined even when one or more singular values is null, but has the drawback of producing arbitrarily high gains in the Cartesian-to-joint space velocity mapping as a singular value approaches zero, as is the case near a singular configuration, since $\sigma_i \to 0$ means that $1/\sigma_i \to \infty$. Thus, whereas the pseudo inverse allows for a solution when the manipulator is precisely at a singular configuration (one or more singular values equal to zero), the pseudo inverse is nevertheless ill conditioned (arbitrarily high singular values) in the neighborhood of the kinematic singularity.

Dealing with kinematic singularities and the ill conditioned behavior in their vicinity is inherent to the control of robots with multiple rotary joints and solutions to dealing with these singularities for robot automation and control are well-known. One such solution is for example disclosed by Miguel Prada Sarasols in his Master's thesis (Cinematica y Singularidades en Teleoperacion, June 2010), in which control of a robotic arm with a serial architecture is made using the SVD decomposition of the Jacobian to determine and get rid of the Cartesian space velocity components in the singular direction. For the Type II singularities, he proposed using the redundant degree of freedom to re-orient the manipulator in such a way that the singular direction is moved away from the desired direction of motion.

A specific application of such control is for example disclosed in US9417621B2, which discloses a method for controlling the motion of a medical device, in particular for resolving a control ambiguity caused by coincidence of two axes around which the medical device can rotate at a pivot point. A boundary around identified singularities is defined. However, the solution provided in US9417621B2 is not smooth at the boundary, which may lead to unpredictable control behaviors at the boundary.

Another solution is to employ the "damped pseudo-inverse" to carry out the inverse kinematic mapping of desired end-effector movement to the required joint displacement for planning and control. The "damped pseudo-inverse" implies adding a joint-space velocity damping term A to the calculation:

$$J^D = V \Sigma^D U^T \quad (1)$$

where:

$$\Sigma^D = diag\left(\frac{\sigma_i}{\sigma_i^2 + \lambda^2}\right), i = 1, \dots, m \quad (2)$$

which results in a solution that minimizes $\left\|\vec{v} - J^+ \vec{\dot{q}}\right\|^2 + \lambda^2 \left\|\vec{\dot{q}}\right\|^2$. This solution allows the robot to behave stably when driven near singularities (joint velocities are bounded), at the expense of fidelity of path following. As the manipulator approaches the singular configuration, the path of the end effector will deviate from the commanded path such that commanded joint velocities stay below a limiting value determined by the factor $\lambda$.

Intuitively, the damped pseudo-inverse could be applied to the problem of dealing with kinematic singularities in a teleoperation context. By using an appropriately damped pseudo-inverse, joint velocities will remain within finite limits even if the operator drives the robot toward a singular configuration. Furthermore, force feedback applied in Cartesian space to modulate the admittance of the end-effector, which is critical for effective teleoperation, remains stable throughout the workspace, including in the neighborhood of the singularities. The downside of this approach is that the robot end-effector will no longer faithfully reproduce the motions of the master device as controlled by the hands of the human operator. In the vicinity of a singular configuration, the end-effector velocity commanded by the damped pseudo-inverse will deviate from the velocity commanded by the operator such that the joint velocities are limited specifically in the directions most affected by the singularity, leading to a deviation of the end-effector path from the path followed by the hand of the operator. Thus, if the path followed by the hand of the operator is, for instance, a straight line, the end-effector may follow a curved path, or a path with a "bump" that effectively avoids the singular configuration. This discrepancy between the trajectory commanded by the human operator and the actual trajectory produced by the operator could be catastrophic in teleoperation scenarios in which the smoothness of end-effector motions are essential, e.g. when transporting a vial of radioactive liquid from one location to another.

In order to address this problem, Maneewarn, T. and Hannaford, B. (Haptic Feedback of Kinematic Conditioning for Telerobotic Applications, 1998) have proposed an approach in which the operator will feel a force that pushes the hand of the operator away from the intended path when the intended path commanded by the operator moves the robot arm toward a singular configuration. Additional forces based on the difference between the end-effector velocity commanded by the hand of the operator and the actual end-effector velocity computed by the pseudo inverse, are applied via a haptic device. But whereas the forces applied to the hand of the operator allow the operator to be aware of the deviation of the robot end effector from the intended path, the actual path is nevertheless unexpectedly deviated from the intended path and the actual hand and robot end effector paths are not precisely the same.

Therefore, there is a need to develop an improved method for teleoperated control of a robotic arm in applications that require precise fidelity and absolute control of the end-effectors motions, even when the robotic arm is placed in a configuration that is at or near a kinematic singularity.

## DESCRIPTION OF THE INVENTION

The computer-implemented method for controlling teleoperation of a robotic arm described in the present invention intends to solve the shortcomings of prior-art methods and systems therefor.

The method of the present invention uses a new form of pseudo-inverse - herein referred to as the homogeneously damped pseudo-inverse - that is particularly useful in teleoperation. As opposed to the classical damped pseudo-inverse, which damps each component of the motion differently depending on the commanded direction, in the proposed method all the possible directions of motion are damped by the same factor. As a consequence, the robotic arm will always move in the direction of the command in end-effector space, albeit with a lower velocity magnitude, the closer it gets to the singularity. Because the joint damping increases as the robot arm approaches the singular configuration, the robotic arm will resist commands to move nearer to or through the singular region, but will not deviate the end effector from the operator's intended path.

This resistance to fast movements is fed back to the human operator as a high resistance to the motion by a haptic device used as input/output interface by the human operator. Thus, the human operator detects that the robotic arm is approaching a singularity. In the proposed method, the force applied to the hand of the operator by the haptic device in response to the resistance of the end-effector to fast movements, is an attraction force to the hand of the operator. This attraction force is based on the difference between the actual position and the commanded position of the robot end-effector. As a consequence, rather than being pushed off of an intended hand path and away from the singularity, the operator instead feels a braking force that slows the movement of the hand in all task-space directions, that is to say, in all directions that are afforded by the input device when not near a singularity, e.g. in all 6 degrees-of-freedom for 3D position and orientation control. As a consequence, the paths of both the robot end-effector and of the operator's hand remain faithful to the intended motion of the operator, avoiding for example the unintended curved trajectories illustrated in Maneewarn & Hannaford (1998) and allowing the operator to maintain complete control.

Furthermore, the human operator receives intuitive feedback that the robot is unable to proceed in the commanded direction. The user can intuitively retreat from a singular configuration by exerting forces against the constrained haptic device in the reverse direction (i.e. in the direction opposite to that which brought the end effector to the singularity); as the robot moves away from the singular configuration, the damping and the resistance to movement of the hand will drop, according to the behavior defined by Eq. 1 & 2, allowing the operator to move freely again. The parameter $\lambda$ determines how quickly the damping falls off as the actual configuration moves away from the singular configutation.

In sum, the homogeneously damped pseudo-inverse, used to map operator movements to robot end-effector movements, is not susceptible to producing unintended deviations of the robot end-effector from the path intended by the operator. Intuitive control by the human operator despite otherwise unpredictable behaviour of the robot near singularities is thus achieved.

A first aspect of the invention relates to a computer-implemented method for controlling teleoperation of a robotic arm, comprising: providing a robotic arm including a base, a movable distal end effector and a plurality of joints between the base and the movable distal end effector; at a computerized system interface, receiving a manipulation command from at least one haptic device disposed in a control console remotely located from the robotic arm, to move the end effector with a desired end effector movement; from the manipulation command, calculating an end effector displacement movement of the plurality of joints to execute the desired end effector movement, wherein calculating the end effector displacement movement of the plurality of joints comprises defining a Jacobian matrix for the joints and calculating joint velocities using said Jacobian matrix and executing the desired end effector movement. A homogeneous damped pseudo-inverse is applied to the Jacobian matrix for the joints, in such a way that all the possible directions of motion are damped by a same factor.

In embodiments of the invention, the homogeneous damped pseudo-inverse is applied as follows: $J^H = V \Sigma^H U^T$ wherein $J^H$ is the homogeneously damped pseudo-inverse Jacobian matrix, $V$ is a base for the joint velocity space, $U^T$ is the transposed base for the Cartesian velocity space and

$$\Sigma^H = diag\left(\frac{\zeta_m}{\sigma_i}, i = 1, \ldots, m\right)$$

wherein $\Sigma^H$ is a homogeneously damped diagonal matrix of m elements, in which its singular values $1/\sigma_i$ are all damped by a same damping factor $\zeta_m$, corresponding to the damping coefficient associated with the minimum eigenvalue $\sigma_m$, and thus the joint damping in all the possible directions of motion increases as the robotic arm approaches a singular configuration.

In embodiments of the invention, the joint space velocities computed from a given desired Cartesian space velocity result in an effective Cartesian space velocity that remains parallel to the original velocity command.

In embodiments of the invention, the method further comprises: through the haptic devices, the human operator receiving feedback of the robotic arm's resistance to move in a commanded direction and thus detecting that the robotic arm has approached a singularity.

In embodiments of the invention, when the human operator receives feedback that the robotic arm is unable to proceed in the commanded direction, neither the end-effector nor the hand of the operator is deviated from the intended path.

In embodiments of the invention, the method further comprises: retreating the human operator from the singular configuration by exerting force against the constrained haptic device in the direction opposite to that which brought the end-effector to the singularity; as the robotic arm moves away from the singular configuration, dropping the damping and the resistance to movement of the hand, allowing the human operator to move freely again.

In embodiments of the invention, the force applied to the hand of the human operator by the haptic device in response to the resistance of the end-effector to move in a commanded direction, is an attraction force to the hand of the human operator towards the actual position of the robot end-effector.

The attraction force may be based on the difference between the commanded position and the actual position of the end-effector of the robotic arm.

A second aspect of the invention relates to a system for controlling teleoperation of a robotic arm, comprising: a robotic arm including a base, a movable distal end effector and a plurality of joints between the base and the movable distal end effector; a control console remotely located from the robotic arm, the control console comprising at least one haptic devices; a computerized system interface configured to receive a manipulation command from the haptic device to move the end effector with a desired end effector movement, said computerized system interface comprising processing means for calculating an end effector displacement movement of the plurality of joints to execute the desired end effector movement, wherein calculating the end effector displacement movement of the plurality of joints comprises defining a Jacobian matrix for the joints and calculating joint velocities of said Jacobian matrix, for executing the desired end effector movement, and for, applying a homogeneous damped pseudo-inverse to the Jacobian matrix for the joints, in such a way that all the possible directions of motion are damped by a same factor.

A third aspect of the invention relates to a computer program product comprising computer program instructions/code for performing the method of the first aspect of the invention.

A fourth aspect of the invention relates to a computer-readable memory/medium that stores program instructions/code for performing the method of the first aspect of the invention.

Additional advantages and features of the invention will become apparent from the detailed description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows main elements or subsystems involved in the execution of the method of the invention.

Figure 2 shows in detail a robotic arm that can be remotely controlled by the method of the invention.

Figure 3 shows the components of a control system that maps movements of the operator's hand, as measured by a haptic device (6D joystick) to commanded movements of the robots end effector and that further applies forces to restrain the motions of the operator's hand as a function of the homogenous damped pseudo inverse, according to an embodiment of the invention.

Figure 4 shows a comparison of the path deviations and the force feedback to the hand of the operator using the conventional damped pseudo inverse.

Figure 5 shows a comparison of the path deviations and the force feedback to the hand of the operator using the homogeneous damped pseudo inverse.

## DESCRIPTION OF A WAY OF CARRYING OUT THE INVENTION

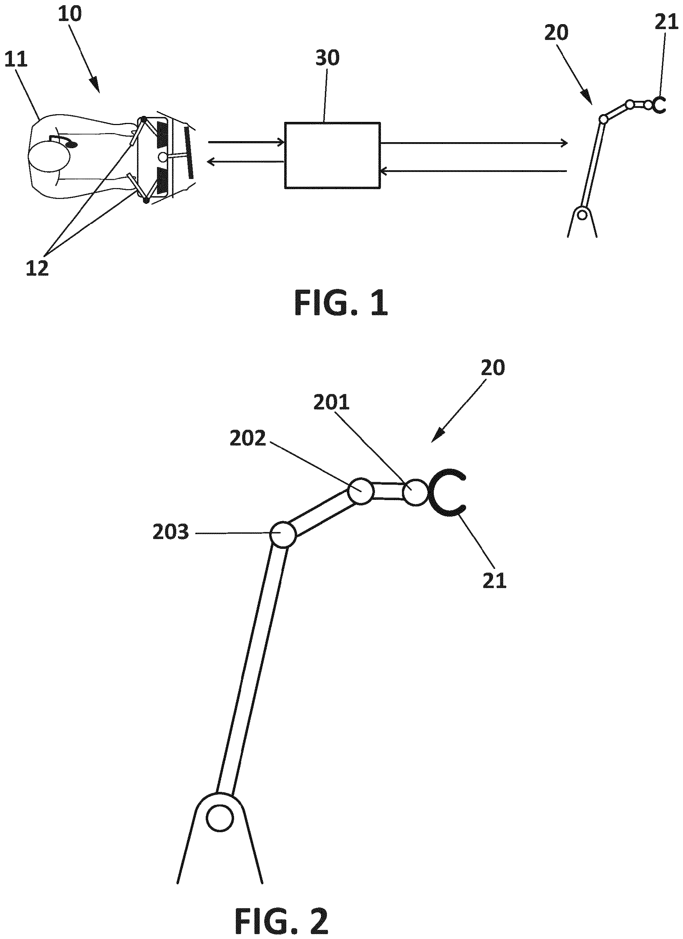

Figure 1 schematically shows a robotic arm 20 and a control console or control unit 10 for controlling the operation of the robotic arm 20. The control console 10 is typically located in a physically separate location from the actual place of operation of the robotic arm 20. The robotic arm 20 is typically accompanied by additional components, such as sensors, camera(s), controls and/or any other component required to remotely communicate with the operator control console 10. An end-effector 21 is coupled to the free end of the robotic arm 20. The robotic arm 20 may for example be used for critical activities, such as activities performed at locations of difficult access (mines, underwater, aerospace, etc.) or dangerous (energy stations, chemical plants, etc.). For example, it may be employed for transporting a vial of radioactive liquid from one location to another.

In use, an operator 11 located at the control console 10 views one or more screens, not illustrated, from which he/she acquires visual knowledge of the operation of the robotic arm 20. The operator uses at least one hand-operated input device 12, such as handle, joystick, gloves, trigger-gun, hand-operated controller, or the like, providing a plurality of degrees-of-freedom (DOF), configured to control a corresponding number of DOF of the robotic arm 20. Typically, the robotic arm 20 is capable of making 3D (position) or 6D (position plus orientation) movements. The hand-operated input devices 12 are haptic devices, meaning that they provide haptic feedback to the operator 11 in a telemanipulation context. Input devices 12 may include a number of links connected by joints so as to facilitate multi-degree-of-freedom movement. Preferably, input devices 12 are provided with at least the same degrees of freedom (such as 3D or 6D) as the associated end-effector 21 to provide the operator 11 with telepresence, or the perception that the input devices 12 are integral with the end-effector 21, so that the operator 11 has an accurate sense of directly controlling the end-effector 21. Thus, from the control console 10, the operator 11 can remotely control the movement and spatial orientation of the end-effector 21 coupled to the free end of the robotic arm 20 by means of haptic device 12 (or a pair of haptic devices 12). The control console 10 may also have other user interfaces, in addition to haptic devices 12, such as mouse, keyboard, and/or other specialized control interfaces.

Box 30 generally refers to hardware and software means, such as a computerized system interface, for controlling the remote operation of the robotic arm 20. It generally includes processing means, such as a computer or a computing workstation. It also generally includes networking and communications hardware associated with the control console 10 and networking and communications hardware associated with the remote location in which the robotic arm 20 is located. Communication between the control console 10 and the robotic arm 20 may be wired or wireless, including long-distance infrastructure, such as cellular networks, internet, satellite, Bluetooth, WiFi, or others. The computerized system interface 30 may be situated in any convenient location, preferably at the control console 10 to provide easy access during use of the system.

The robotic arm 20 includes a portion -proximal portion- coupled to a base and a movable end-effector 21 disposed at a distal end of the robotic arm 20. Between the base and the portion of the robotic arm to which the end effector 21 is coupled -distal portion-, there is a plurality of joints 201-203, shown in Figure 2, having sufficient degrees of freedom to allow a range of differing joint states for a given distal portion state.

During operation of the robotic arm 20, the operator 11 manually uses the haptic input devices 12 to remotely control the end effector 21 of the robotic arm 20, for example moving it within a certain operation volume. In other words, the operator 11 performs a procedure, for example an industrial procedure, by manipulating the input devices 12, so that the computerized system interface 30 causes corresponding movement of the respectively associated end effector 21. For example, the displacement of the operator's hands (for example 6D) can be measured and a command is sent to the robotic arm 20 to execute the same displacement. In other words, there is a direct mapping from the motion of the hand to the desired endpoint motion of the robotic arm.

Preferably, the operator 11 simultaneously views the work site either directly or through a window from a certain distance or on the screen(s) if images of the work site are being captured by a camera, preferably in 3D.

Thus, when the operator 11 moves the input devices 12 with his/her hands, a manipulation command is created, to move the end-effector 21 with a desired end-effector movement. From this manipulation command, in order to execute the desired end-effector movement, it is calculated an end-effector displacement movement of the plurality of joints 201-203 comprised in the robotic arm 20. To this end, values of a Jacobian matrix for the joints of the robotic arm 20 are calculated. These values are used to compute the velocities of the joints 201-203 needed to produce the desired end effector movement. As one skilled in the art is aware of, the Jacobian matrix represents the relationship between Cartesian-space velocity and joint-space velocity. For example, as the operator 11 moves the input devices 12 from one position to another, sensors associated with the input devices 12 sense such movement and provide digital information indicating such movement in joint space to the computerized system interface 30. The computerized system interface 30 processes the information received from the sensors of the input devices 12 to transform the information into corresponding desired positions and velocities of the end-effector 21 by computing, for example, joint velocities from the desired end effector velocity and the joint position information and performing the transformation using the Jacobian matrix using well-known transformation techniques.

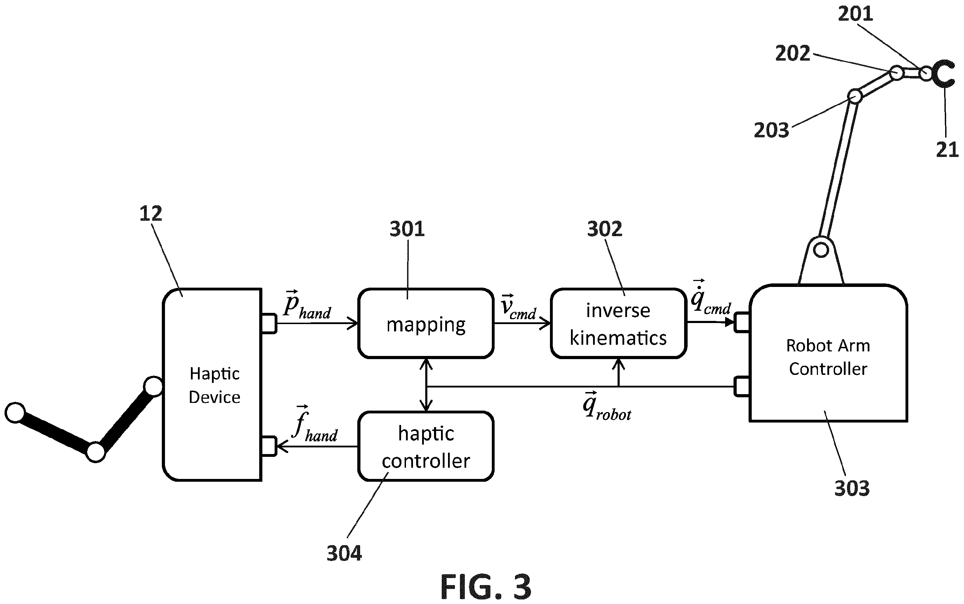

Figure 3 shows the structure of a typical implementation of the computerized system interface 30 that includes four principle computational modules, although different disposition of these modules can be envisaged. A mapping module 301 maps measured pose (position and orientation) $\vec{p}_{hand}$ of the haptic device 12 to a desired motion $\vec{v}_{cmd}$ of the end effector 21 of the robot arm 20 based on the current configuration $\vec{q}_{robot}$ of the plurality of joint 201 - 203 of the robot arm 20. Typically, the computation of $\vec{v}_{cmd}$ relies on the computation of the forward kinematics that maps the configuration $\vec{q}_{robot}$ of the plurality of joints 201 - 203 to the 6D pose (position and orientation) of the robot $\vec{p}_{robot}$ in Cartesian space. An inverse kinematics module 302 converts the commanded velocity $\vec{v}_{cmd}$ of the robot end effector into a commanded rotational velocity $\dot{\vec{q}}_{cmd}$ that is then fed to a robot arm controller 303. The actual state $\vec{q}_{robot}$ of the plurality of joints 201 - 203 of the robot arm 20 is measured by the robot arm controller 303 and fed to the mapping 301, inverse kinematics 302 and haptic controller 304 modules. The haptic controller module 304 computes a vector $\vec{f}_{hand}$ comprising the forces and torques to be applied to the hand of the operator by the haptic device 12.

However, the robotic arm 20 may encounter an unwanted singularity caused by the inverse kinematics of the robotic arm 20. In this case, the robotic arm joints could be commanded to move in a manner that cannot be resolved without some form of intervention. When the robotic arm joints 201-203 approach a position that impairs further movement in one or more directions, the operator 11 receives some form of feedback related to this condition, as the robotic arm approaches singularity. In the present invention, the feedback is in the form of haptic feedback through the haptic input devices 12. In response to the feedback, one corrective measure taken by the operator 11 involves retreating from the singularity by reversing the direction of motion and then planning and executing a new trajectory of the hand that the robot end effector can follow by avoiding the singularity.

When the robotic arm 20 is placed in a configuration at or near a kinematic singularity, in order to prevent the robotic arm 20 from becoming unstable because, for example, at one or more of the joints an amount of near-infinite values of velocities is requested, a homogeneous damped pseudo-inverse is applied to the Jacobian matrix for the joints 201-203, in which all the possible directions of motion in joint space are damped by a same factor. In other words, the same damping is applied to all the degrees of freedom in joint space, which effectively also damps the motion in all directions in task space. When this occurs, force feedback is provided by the robotic arm 20 to the input devices 12, therefore felt by the hands of the operator. Thus, the operator 11 becomes aware that a limitation or constraint is being imposed by the force that he/she feels resisting the movement of the input devices 12. Besides, the joint damping increases as the robotic arm 20 approaches the singular configuration as a result of the calculations in Eq. 1 and 2, wherein the parameter $\lambda$ determines how quickly the damping falls off as the actual configuration moves away from the singular configutation. Therefore, the robotic arm 20 will resist commands as it's moved near to or through the singular region. It is remarked that the system always applies the homogeneous damped pseudo inverse. In other words, the damped pseudo inverse always imposes a homogeneous damping ratio on all joints, no matter how far from the singularity. However, when the configuration of the robot is far from a singularity, the damping becomes negligible and the pseudo-inverse approaches the true inverse. In other words, as the distance -to a singularity- increases the homogeneous damping decreases such that it becomes negligible. The amount of damping applied at a given distance from a singularity is determined by the parameter $\lambda$ in equation (1).

The homogeneously damped pseudo-inverse is obtained by computing an effective damping ratio that would be applied to a minimum singular value.

A well-known solution to this problem is to add a joint space velocity damping term to the calculation -the damped pseudo-inverse-, which results in a solution that minimizes $\left\|\vec{v} - J^+\vec{q}\right\|^2 + \lambda^2\left\|\vec{q}\right\|^2$. The damped pseudo-inverse can be represented in SVD terms as

$$J^D = V\Sigma^D U^T$$

where

$$\Sigma^D = diag\left(\frac{\sigma_i}{\sigma_i^2 + \lambda^2}, i = 1, ..., m\right)$$

Here, when $\sigma_i \gg \lambda$ then $\frac{\sigma_i}{\sigma_i^2 + \lambda^2} \rightarrow 1/\sigma_i$, which is the case with the inverse or pseudo-inverse. When $\sigma_i = 0$, then $\frac{\sigma_i}{\sigma_i^2 + \lambda^2} = 0$, which is also the case with the conventional pseudo-inverse. However, this also has the property that when $\sigma_i \rightarrow 0$, then $\frac{\sigma_i}{\sigma_i^2 + \lambda^2} \rightarrow 0$ as well. This is not the case with the pseudo-inverse, where for $\sigma_i \rightarrow 0$, then $1/\sigma_i \rightarrow \infty$.

This technique can, therefore, be used to limit the joint space velocities generated when trying to produce a given Cartesian space velocity in the vicinity of a singular configuration. However, the effective damping factor applied to each of the singular values is different, and depends on the magnitude of the singular value itself. That is, a damping ratio for a given singular value $\zeta_i$ can be defined as

$$\zeta_i = \frac{\frac{\sigma_i}{\sigma_i^2 + \lambda^2}}{1/\sigma_i}$$

which represents by how much Cartesian space velocities in the direction of the i-th vector in the base U is damped when using the damped pseudo-inverse as compared to the regular pseudo-inverse.

Then it can be seen that $\sigma_i \neq \sigma_j \rightarrow \zeta_i \neq \zeta_j$

What this means, in practice, is that components of the Cartesian space velocity corresponding to different singular values are mapped to the joint velocity space with different damping ratios. This, in turn, means that the original direction of the Cartesian space velocity vector is not maintained by this mapping.

$$\vec{v}_D = J\vec{q}_D = JJ^D\vec{v}$$

In turn, the homogeneously damped pseudo-inverse provided in the present invention is obtained by computing an effective damping ratio that would be applied to the minimum singular value, which by definition is always the greatest of the damping ratios, and applying that same ratio to all singular values. That is:

$$J^H = V \, \Sigma^H \, U^T$$

where

$$\Sigma^H = diag\left(\frac{\zeta_m}{\sigma_i}, i = 1, \dots, m\right)$$

It is remarked that typically it is stipulated that $\sigma_1$ - $\sigma_m$ are sorted in descending order of magnitude. $\Sigma^H$ is a homogeneously damped diagonal matrix of m elements, in which its singular values $1/\sigma_i$ are all damped by a same damping factor $\zeta_m$, corresponding to the damping coefficient associated with the minimum eigenvalue $\sigma_m$.

Thus, joint space velocities computed from a given desired Cartesian space velocity with $\vec{q} = {}_{J^H\vec{v}}$ always result in an effective Cartesian space velocity $\vec{v}_H$ that remains parallel to the original velocity command:

$$\vec{v}_H = J\vec{q}_H = JJ^H\vec{v} \quad \text{(parallel to } \vec{v}\text{)}$$

As explained, through the haptic devices 12, the human operator 11 receives feedback of the robotic arm's resistance to fast movements and thus detects that the robotic arm 20 has approached a singularity. The robotic arm's resistance to movements is fed back to the human operator 11 as a high resistance to the motion by a haptic device used as input/output interface by the human operator. Thus, the human operator receives intuitive feedback that the robotic arm 20 is unable to proceed in the commanded direction, that is to say, that the robotic arm is approaching a singularity. Nevertheless, neither the end-effector 21 nor the hand of the operator 11 is deviated from the intended path; the robotic arm 20 only resists further movement, without deviating from the commanded trajectory. It resists in any direction, while ensuring resulting motion is parallel to (but of lower magnitude than) the commanded velocity. Then, the user can intuitively retreat from a singular configuration by exerting forces against the constrained haptic device in the reverse direction (i.e. in the direction opposite to that which brought the end-effector to the singularity); as the robot moves away from the singular configuration, the damping and the resistance to movement of the hand drops, allowing the operator 11 to move freely again.

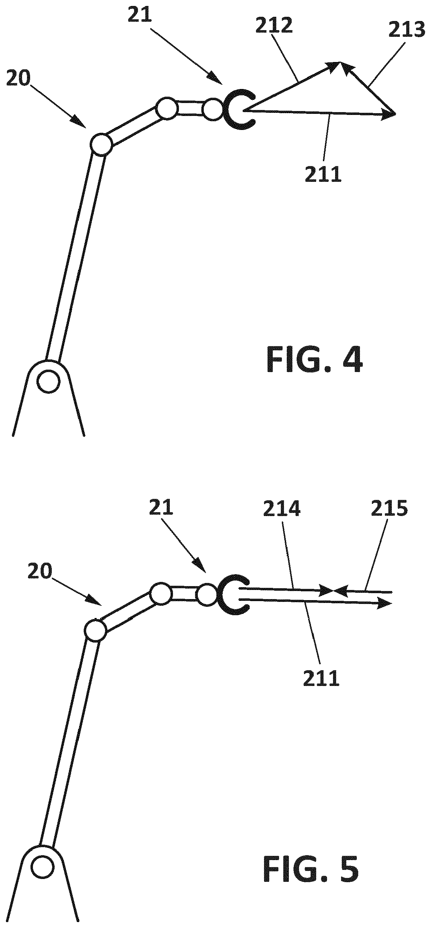

The force applied to the hand of the operator by the haptic device in response to the resistance of the end-effector to fast movements, is an attraction force to the hand of the operator. This attraction force is based on the difference between the commanded position and the actual position of the robot end-effector. As a consequence, rather than being pushed off of an intended hand path, the operator instead feels a breaking force that slows the movement of the hand in all directions. As a consequence, the robotic arm will always move in the direction of the command in end-effector space, albeit with a lower velocity magnitude, the closer it gets to the singularity. Because the joint damping increases as the robot arm approaches the singular configuration, the robotic arm will resist commands to move nearer to or through the singular region, but will not deviate the end effector from the operator's intended path. Thus, the paths of both the robot end-effector and the operator's hand remain faithful to the intended motion of the operator, avoiding for example the unintended curved trajectories illustrated in Maneewarn & Hannaford (1998) and allowing the operator to maintain complete control. Figure 4 shows a comparison of the path deviations and the force feedback to the hand of the operator using the conventional damped pseudo inverse, while Figure 5 shows a comparison of the path deviations and the force feedback to the hand of the operator using the homogeneous damped pseudo inverse. In Figure 4 reference 211 indicates the commanded velocity, reference 212 indicates the velocity that may result from applying damped pseudoinverse and reference 213 indicates the error (and therefore feedback force) that may result from applying damped pseudoinverse. In Figure 5 reference 211 indicates the commanded velocity, reference 214 indicates the velocity that may result from applying homogeneously damped pseudoinverse and reference 215 indicates the error (and therefore feedback force) that may result from applying homogeneously damped pseudoinverse according to the invention.

A new form of pseudo-inverse has been disclosed, called the homogeneously damped pseudo-inverse, in which all the possible directions of motion of the robotic joints are damped by a same factor. As a consequence, the robotic arm always moves in the direction of the command, only with a lower velocity magnitude in all directions the closer it gets to the singularity.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method for controlling teleoperation of a robotic arm, comprising:

providing a robotic arm (20) including a base, a movable distal end effector (21) and a plurality of joints between the base and the movable distal end effector (21),

at a computerized system interface (30), receiving a manipulation command from at least one haptic device (12) disposed in a control console (10) remotely located from the robotic arm (20), to move the end effector (21) with a desired end effector movement,

from the manipulation command, calculating an end effector (21) displacement movement of the plurality of joints to execute the desired end effector movement, wherein calculating the end effector (21) displacement movement of the plurality of joints comprises defining a Jacobian matrix for the joints and calculating joint velocities using said Jacobian matrix and

executing the desired end effector movement,

wherein a homogeneous damped pseudo-inverse is applied to the Jacobian matrix for the joints, in such a way that all the possible directions of motion are damped by a same factor.

2. The method of claim 1, wherein the homogeneous damped pseudo-inverse is applied as follows:

$$J^H = V\ \Sigma^H\ U^T$$

wherein $J^H$ is the homogeneously damped pseudo-inverse Jacobian matrix, V is a base for the joint velocity space, $U^T$ is the transposed base for the Cartesian velocity space and

$$\Sigma^H = diag(\frac{\zeta_m}{\sigma_i}, i = 1, \ldots, m)$$

wherein $\Sigma^H$ is a homogeneously damped diagonal matrix of m elements, in which its singular values $1/\sigma_i$ are all damped by a same damping factor $\zeta_m$, corresponding to the damping coefficient associated with the minimum eigenvalue $\sigma_m$,

and thus the joint damping in all the possible directions of motion increases as the robotic arm (20) approaches a singular configuration.

3. The method of any one of the preceding claims, wherein the joint space velocities computed from a given desired Cartesian space velocity result in an effective Cartesian space velocity that remains parallel to the original velocity command.

4. The method of any one of the preceding claims, further comprising:

through the haptic devices (12), the human operator (11) receiving feedback of the robotic arm's resistance to move in a commanded direction and thus detecting that the robotic arm (20) has approached a singularity.

5. The method of claim 4, wherein when the human operator (11) receives feedback that the robotic arm (20) is unable to proceed in the commanded direction, neither the end-effector (21) nor the hand of the operator (11) is deviated from the intended path.

6. The method of either claim 4 or 5, further comprising:

retreating the human operator (11) from the singular configuration by exerting force against the constrained haptic device (12) in the direction opposite to that which brought the end-effector (21) to the singularity;

as the robotic arm (20) moves away from the singular configuration, dropping the damping and the resistance to movement of the hand, allowing the human operator (11) to move freely again.

7. The method of any one of claims 4-6, wherein the force applied to the hand of the human operator (11) by the haptic device (12) in response to the resistance of the end-effector (21) to move in a commanded direction, is an attraction force to the hand of the human operator towards the actual position of the robot end-effector (11).

8. The method of claim 7, wherein said attraction force is based on the difference between the commanded position and the actual position of the end-effector (21) of the robotic arm (20).

9. A system for controlling teleoperation of a robotic arm, comprising:

a robotic arm (20) including a base, a movable distal end effector (21) and a plurality of joints between the base and the movable distal end effector (21),

a control console (10) remotely located from the robotic arm (20), the control console (10) comprising at least one haptic device (12),

a computerized system interface (30) configured to receive a manipulation command from the haptic device (12) to move the end effector (21) with a desired end effector movement, said computerized system interface (30) comprising processing means for calculating an end effector (21) displacement movement of the plurality of joints to execute the desired end effector movement, wherein calculating the end effector (21) displacement movement of the plurality of joints comprises defining a Jacobian matrix for the joints and calculating joint velocities of said Jacobian matrix, for executing the desired end effector movement, and for, applying a homogeneous damped pseudo-inverse to the Jacobian matrix for the joints, in such a way that all the possible directions of motion are damped by a same factor.

10. A computer program product comprising computer program instructions/code for performing the method according to any one of claims 1-8.

11. A computer-readable memory/medium that stores program instructions/code for performing the method according to any one of claims 1-8.

**FIG. 1**

**FIG. 2**

FIG. 3

EP 3 845 346 A1

**FIG. 4**

**FIG. 5**

Europäisches
Patentamt

European
Patent Office

Office européen
des brevets

# EUROPEAN SEARCH REPORT

Application Number

EP 19 38 3218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 893 254 A (CHAN STEPHEN K C [CA] ET AL) 9 January 1990 (1990-01-09)<br>* column 3, line 38 - line 40 *<br>* column 4, line 47 - line 59 *<br>* column 6, line 4 - line 68 *<br>* figure 1 * | 1-11 | INV.<br>B25J9/16 |
| A | US 2018/042687 A1 (NOWLIN WILLIAM C [US] ET AL) 15 February 2018 (2018-02-15)<br>* the whole document * | 1-11 | |
| A | SELVAGGIO MARIO ET AL: "Haptic-Based Shared-Control Methods for a Dual-Arm System",<br>IEEE ROBOTICS AND AUTOMATION LETTERS,<br>IEEE,<br>vol. 3, no. 4, 1 October 2018 (2018-10-01)<br>, pages 4249-4256, XP011689246,<br>DOI: 10.1109/LRA.2018.2864353<br>[retrieved on 2018-08-21]<br>* the whole document * | 1-11 | |
| | | | TECHNICAL FIELDS SEARCHED (IPC) |
| A | WO 95/23054 A1 (INTELLIGENT SYSTEMS SOLUTIONS [GB] ET AL.)<br>31 August 1995 (1995-08-31)<br>* the whole document * | 1-11 | B25J<br>G05B |
| A | US 2017/095303 A1 (HOURTASH ARJANG M [US] ET AL) 6 April 2017 (2017-04-06)<br>* the whole document * | 1-11 | |

The present search report has been drawn up for all claims

| Place of search | Date of completion of the search | Examiner |
|---|---|---|
| The Hague | 9 June 2020 | Falconi, Riccardo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 3 845 346 A1**

## ANNEX TO THE EUROPEAN SEARCH REPORT
## ON EUROPEAN PATENT APPLICATION NO.

EP 19 38 3218

09-06-2020

| Patent document cited in search report | | Publication date | Patent family member(s) | | Publication date |
|---|---|---|---|---|---|
| US 4893254 | A | 09-01-1990 | CA | 1330584 C | 05-07-1994 |
| | | | EP | 0338705 A2 | 25-10-1989 |
| | | | FI | 891876 A | 21-10-1989 |
| | | | JP | H01316187 A | 21-12-1989 |
| | | | US | 4893254 A | 09-01-1990 |
| US 2018042687 | A1 | 15-02-2018 | AT | 544414 T | 15-02-2012 |
| | | | CN | 101227870 A | 23-07-2008 |
| | | | CN | 102764159 A | 07-11-2012 |
| | | | CN | 104758055 A | 08-07-2015 |
| | | | CN | 109700535 A | 03-05-2019 |
| | | | EP | 1885273 A2 | 13-02-2008 |
| | | | EP | 2332477 A2 | 15-06-2011 |
| | | | EP | 2332478 A2 | 15-06-2011 |
| | | | EP | 2332479 A2 | 15-06-2011 |
| | | | EP | 2332480 A2 | 15-06-2011 |
| | | | EP | 2332481 A2 | 15-06-2011 |
| | | | EP | 2332482 A2 | 15-06-2011 |
| | | | EP | 2332483 A2 | 15-06-2011 |
| | | | EP | 2332484 A2 | 15-06-2011 |
| | | | EP | 3231386 A1 | 18-10-2017 |
| | | | EP | 3231387 A1 | 18-10-2017 |
| | | | EP | 3231388 A1 | 18-10-2017 |
| | | | ES | 2381975 T3 | 04-06-2012 |
| | | | KR | 20080047318 A | 28-05-2008 |
| | | | KR | 20130010091 A | 25-01-2013 |
| | | | KR | 20130010092 A | 25-01-2013 |
| | | | KR | 20130010093 A | 25-01-2013 |
| | | | US | 2007013336 A1 | 18-01-2007 |
| | | | US | 2011264108 A1 | 27-10-2011 |
| | | | US | 2011264109 A1 | 27-10-2011 |
| | | | US | 2011264110 A1 | 27-10-2011 |
| | | | US | 2011264111 A1 | 27-10-2011 |
| | | | US | 2011264112 A1 | 27-10-2011 |
| | | | US | 2011270271 A1 | 03-11-2011 |
| | | | US | 2011276059 A1 | 10-11-2011 |
| | | | US | 2015032126 A1 | 29-01-2015 |
| | | | US | 2015051733 A1 | 19-02-2015 |
| | | | US | 2017215974 A1 | 03-08-2017 |
| | | | US | 2017215975 A1 | 03-08-2017 |
| | | | US | 2017215976 A1 | 03-08-2017 |
| | | | US | 2018028268 A1 | 01-02-2018 |
| | | | US | 2018042687 A1 | 15-02-2018 |
| | | | US | 2020060777 A1 | 27-02-2020 |
| | | | WO | 2006124390 A2 | 23-11-2006 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 19 38 3218

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2020

| Patent document cited in search report | Publication date | Patent family member(s) | Publication date |
|---|---|---|---|
| WO 9523054 A1 | 31-08-1995 | AU 1715495 A | 11-09-1995 |
| | | GB 2301907 A | 18-12-1996 |
| | | WO 9523054 A1 | 31-08-1995 |
| US 2017095303 A1 | 06-04-2017 | CN 105050529 A | 11-11-2015 |
| | | EP 2969404 A1 | 20-01-2016 |
| | | JP 2016512733 A | 09-05-2016 |
| | | JP 2019111352 A | 11-07-2019 |
| | | KR 20150126951 A | 13-11-2015 |
| | | US 2014316431 A1 | 23-10-2014 |
| | | US 2017095303 A1 | 06-04-2017 |
| | | WO 2014146120 A1 | 18-09-2014 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9417621 B2

**Non-patent literature cited in the description**

- **MIGUEL PRADA SARASOLS.** Cinematica y Singularidades en Teleoperacion. *Master's thesis,* June 2010

- **MANEEWARN, T. ; HANNAFORD, B.** *Haptic Feedback of Kinematic Conditioning for Telerobotic Applications,* 1998